# EUROPÄISCHE PATENTANMELDUNG

(11) **EP 0 899 025 A1**
(43) Veröffentlichungstag der Anmeldung: **03.03.1999**
(21) Anmeldenummer: 98115463.6
(22) Anmeldetag: 17.08.1998
(51) Int. Cl.: B06B 1/06, G01N 29/04

(54) **Ultraschallwandler-Prüfkopf und Verfahren zu dessen Betrieb**

(30) Priorität: 27.08.1997 DE 19737398
(71) Anmelder: SIEMENS AKTIENGESELLSCHAFT, 80333 München (DE)
(72) Erfinder: Ritter, Joachim, Dipl.-Ing., 91077 Neunkirchen am Brand (DE)

(57) **Zusammenfassung**

Es wird ein Ultraschallwandler-Prüfkopf (1) für die zerstörungsfreie Materialprüfung beschrieben, der einen aus einzeln ansteuerbaren Wandlerelementen (25A, 25B) aufgebauten Ultraschallwandler (3) und einen Vorlaufkörper (5) umfaßt. Es ist vorgesehen, daß der Vorlaufkörper (5) mindestens zwei akustisch voneinander getrennte Teilkörper (5A, 5B) aufweist, an die jeweils wenigstens ein Wandlerelement (25A, 25B) akustisch angekoppelt ist, an welches nicht auch der andere Teilkörper (5B, 5A) akustisch angekoppelt ist. Bevorzugt sind die Wandlerelemente (25A, 25B) gebildet durch räumliches Überdecken von ersten Elektroden (15) auf einer ersten Flachseite (13) mit zweiten Elektroden (21) auf einer zweiten Flachseite (19) an dem Ultraschallwandler (3).

## Beschreibung

Die Erfindung liegt auf dem Gebiet der zerstörungsfreien akustischen Meß- und/oder Prüftechnik.

Die Erfindung betrifft einen Ultraschallwandler-Prüfkopf, insbesondere für die zerstörungsfreie Materialprüfung, mit einem aus einzeln ansteuerbaren Wandlerelementen aufgebauten Ultraschallwandler und mit einem Vorlaufkörper. Sie betrifft auch ein Verfahren zum Betreiben eines solchen Ultraschallwandler-Prüfkopfes.

Bei der zerstörungsfreien Materialprüfung mit Ultraschall ist es in der Regel erforderlich, größere Bereiche eines Werkstücks nach unterschiedlichen Fehlerarten zu analysieren. Hierzu ist es notwendig, den Ultraschall in unterschiedlichen Prüfpositionen und Prüfrichtungen an die Werkstückoberfläche anzukoppeln. Um die Anzahl der für eine Werkstoffprüfung erforderlichen Ultraschall-Prüfköpfe und der damit erforderlichen Positionswechsel zu verringern, ist es bekannt, Prüfköpfe zu verwenden, die mehrere nebeneinander angeordnete Ultraschall-Wandlerelemente enthalten. Solche als Array bezeichneten Ultraschallwandler-Anordnungen ermöglichen es, durch phasenverzögerte Ansteuerung der einzelnen Wandlerelemente Ultraschallsignale in unterschiedliche Richtungen in das Werkstück einzukoppeln und aus unterschiedlichen Richtungen zu empfangen.

Bei einem linearen Ultraschallwandler-Array sind die einzelnen Wandlerelemente entlang einer einzigen Achse nebeneinander aufgereiht angeordnet. Zwischen dem Array und der Werkstückoberfläche befindet sich ein Vorlaufkörper, beispielsweise ein Vorlaufkeil. Mit einem derartigen Array ist ein Schwenk in einer Ebene im Werkstück möglich, die sich parallel zur Längsrichtung des Ultraschallwandler-Arrays erstreckt. Der Schwenk erfolgt je nach geometrischer Form des Vorlaufkörpers in einem vorbestimmten Winkelbereich relativ zur Oberfläche des Werkstücks.

Während bei linearen Ultraschallwandler-Arrays ein Schwenk nur in einer Ebene vorgenommen werden kann, ermöglichen matrixförmige Ultraschallwandler-Arrays einen Schwenk mindestens in zwei zueinander orthogonalen Ebenen, so daß ohne Prüfkopfwechsel und ohne Ortswechsel des Prüfkopfes ein großer Bereich des Werkstücks nach unterschiedlichen Fehlern untersucht werden kann.

In dem Fachartikel von H. Wüstenberg et al. in 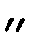 Materialprüfung", Band 28 (1986), Nr. 1/2, Seiten 20 bis 24, ist ein Ultraschall-Prüfkopf beschrieben, der zwei separate, räumlich getrennte, lineare Ultraschallwandler-Arrays (Gruppenstrahler) aufweist, die an je einem zugehörigen Vorsatzkeil akustisch angekoppelt sind. Eines der Arrays dient als Empfänger, das andere als Sender, so daß der Ultraschall-Prüfkopf insgesamt im Sende-Empfangs-Modus betreibbar ist.

Gegenüber einem Impuls-Echo-Modus, bei dem das Senden und das Empfangen des Ultraschalles mit demselben Wandler stattfindet, weist der Sende-Empfangs-Modus den Vorteil eines großen Nahauflösungsvermögens auf. Der Sende-Empfangs-Modus funktioniert auch bei kurzen Schallwegen, wie beispielsweise bei oberflächennahen Fehlern im Werkstück, präzise und fehlerfrei. Dagegen ist beim Impuls-Echo-Modus der Ultraschallwandler für eine bestimmte Zeit nach dem Senden durch ein als 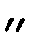 Nachklingeln" bezeichnetes Phänomen nicht für den Empfang reflektierter Ultraschallwellen empfindlich.

Nachteilig an dem in dem genannten Fachartikel beschriebenen Ultraschallwandler-Prüfkopf ist die große Ankoppelfläche, die notwendig ist, um den Ultraschallwandler-Prüfkopf akustisch an das Werkstück anzukoppeln. Ein weiterer Nachteil liegt darin, daß insbesondere dann, wenn der Abstand zwischen den separaten Gruppenstrahlern für eine ausreichende akustische Trennung groß gewählt werden muß, für den Impuls-Echo-Modus nur jeweils eines der beiden Ultraschallwandler-Arrays genutzt werden kann.

Aus der Europäischen Patentschrift EP 0 667 978 B1, Spalte 6, ist ein Ultraschallwandler-Array bekannt, das an einen einzigen Vorlaufkörper (Vorlaufkeil) akustisch angekoppelt ist. Das Ultraschallwandler-Array ist sowohl im Impuls-Echo-Modus als auch im Sende-Empfangs-Modus betreibbar. Für den Sende-Empfangs-Modus wird das Ultraschallwandler-Array durch entsprechende Ansteuerung elektronisch in zwei Untergruppen getrennt. Eine dieser Untergruppen arbeitet dann als Sender, während die andere Untergruppe als Empfänger aktiv ist. Zur akustischen Trennung dieser beiden Untergruppen ist vorzugsweise eine dritte, inaktiv geschaltete Untergruppe zwischen den beiden vorgenannten Untergruppen vorgesehen. Nachteile ergeben sich bei Messungen, bei denen ein trotz akustischer Trennung - infolge ungewollter Reflexionen im Vorlaufkörper - detektiertes Kopfecho zu groß ist und somit den Anforderungen nicht genügt.

Die der Erfindung zugrunde liegende Aufgabe besteht darin, einen aus einzeln ansteuerbaren Wandlerelementen aufgebauten Ultraschallwandler-Prüfkopf anzugeben, der sowohl im Impuls-Echo- als auch im Sende-Empfangs-Modus betreibbar ist, und bei dem die akustische Trennung zwischen dem Sender und dem Empfänger beim Sende-Empfangs-Modus gegenüber den bekannt gewordenen Ultraschallwandler-Anordnungen verbessert ist. Gleichfalls soll der Ultraschallwandler kompakt aufgebaut sein, so daß er mit einer geringen Ankoppelfläche auf der Werkstückoberfläche auskommt.

Es ist ebenfalls Aufgabe der Erfindung, ein Verfahren zum Betreiben des Ultraschallwandler-Prüfkopfes anzugeben.

Die auf einen Prüfkopf bezogene Aufgabe wird gemäß der Erfindung gelöst durch einen Ultraschallwandler-Prüfkopf mit einem aus einzeln ansteuerbaren Wandlerelementen aufgebauten Ultraschallwandler und mit einem Vorlaufkörper, wobei der Ultraschallwandler-Prüfkopf dadurch gekennzeichnet ist, daß der Vorlaufkörper mindestens zwei durch einen Trennbereich akustisch voneinander getrennte Teilkörper aufweist, und daß mindestens zwei der Teilkörper an jeweils wenigstens ein Wandlerelement akustisch angekoppelt sind, an welches nicht auch der jeweils andere Teilkörper akustisch angekoppelt ist.

Der in die Teilkörper getrennte Vorlaufkörper ist grundsätzlich einer Anordnung von zwei oder mehr akustisch getrennten Vorlaufkörpern gleichzusetzen und durchaus auch als solche Anordnung zu verstehen. Das Wort 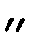 Teilkörper" ist lediglich deshalb gewählt, um zu veranschaulichen, daß in den meisten Anwendungen die einzelnen Teilkörper bezüglich ihrer äußeren Form sehr ähnlich sind und deshalb insgesamt den Eindruck eines einzigen Vorlaufkörpers erwecken. Der beispielsweise aus Plexiglas gefertigte Vorlaufkörper ist insbesondere ein Vorlaufkeil, dessen Keilwinkel der gewünschten Ausbreitungsrichtung der Schallwelle im Werkstück entsprechend gewählt ist. Die einzelnen Keilwinkel der Teilkörper sind bevorzugt alle identisch.

Akustisch angekoppelt sind die einzelnen Wandlerelemente an die einzelnen Teilkörper durch eine Klebe- oder Pressverbindung oder dergleichen.

Der Ultraschallwandler-Prüfkopf nach der Erfindung stellt eine Abkehr von der bislang allgemein üblichen Technik dar, wonach ein oder mehrere Ultraschallwandler ausschließlich einem einzigen Vorlaufkörper zugeordnet sind. Im Gegensatz dazu ist bei dem Ultraschallwandler-Prüfkopf der Ultraschallwandler gleichzeitig mehreren Teilkörpern bzw. Vorlaufkörpern zugeordnet. Der Erfindung liegt nämlich auch die Erkenntnis zugrunde, daß die Abstrahl- bzw. Empfangscharakteristik eines Ultraschallwandlers nur unwesentlich verändert ist, falls der Ultraschallwandler nicht wie bisher üblich an einen Vorlaufkörper, sondern an mehrere akustisch voneinander getrennte Teilkörper akustisch angekoppelt ist. Die Teilkörper sind hierzu durch einen Trennbereich akustisch voneinander getrennt, dessen Dicke vorzugsweise im Bereich der Wellenlänge des verwendeten Ultraschalls, insbesondere im Bereich von 1/10 bis zum 10-fachen der Wellenlänge, z.B. im Bereich von 0,5 mm bis 3 mm, liegt. Insbesondere bleibt die Einstellbarkeit der Einschallwinkel trotz der Teilung des Vorlaufkörpers erhalten.

Der Ultraschallwandler-Prüfkopf ist in vorteilhafter Weise sowohl im Impuls-Echo-Modus als auch im Sende-Empfangs-Modus betreibbar. Im Impuls-Echo-Modus können mit Vorteil für die Effizienz des Prüfkopfs alle vorhandenen Wandlerelemente, d.h. insbesondere alle zu den unterschiedlichen Teilkörpern gehörigen Wandlerelemente, sowohl als Sender als auch als Empfänger genutzt werden. Im Sende-Empfangs-Modus kommen Wandlerelemente als Sender zum Einsatz, die an den einen Teilkörper angekoppelt sind, und es kommen Wandlerelemente als Empfänger zum Einsatz, die an den anderen Teilkörper angekoppelt sind. Gegenüber der aus der Patentschrift EP 0 667 978 B1 bekannt gewordenen Ultraschallwandler-Anordnung ist die akustische Trennung zwischen dem Sender und dem Empfänger erheblich verbessert.

Beispielsweise sind die Wandlerelemente entlang einer Achse (lineares Ultraschallwandler-Array) oder entlang von zwei linear unabhängigen (nicht-parallelen) Achsen aufgereiht angeordnet. Bei dem letztgenannten Fall eines mehrdimensionalen Ultraschallwandler-Arrays sind die Wandlerelemente rechteckförmig, insbesondere in Form einer Matrix, angeordnet. Beispielsweise sind die Wandlerelemente schachbrettmusterartig angeordnet.

Das Array, bei dem die Wandlerelemente entlang von zwei linear unabhängigen (nicht-parallelen) Achsen aufgereiht angeordnet sind, bietet den zusätzlichen Vorteil, daß für die abgesandte bzw. empfangene Ultraschallwelle ein Richtungsschwenk in zumindest zwei zueinander linear unabhängigen (nicht-parallelen) Ebenen im Raum möglich ist.

Eine Matrix wird vornehmlich dadurch gebildet, daß der Ultraschallwandler-Prüfkopf einen Ultraschallwandler aufweist, bei dem ein piezoelektrischer Körper an einer ersten Flachseite mit voneinander elektrisch getrennten ersten Elektroden versehen ist, denen an der von der ersten Flachseite abgewandten zweiten Flachseite voneinander und von den ersten Elektroden elektrisch getrennte zweite Elektroden derart zugeordnet sind, daß sich die ersten Elektroden und die zweiten Elektroden in einer Draufsicht auf eine der Flachseiten gesehen jeweils in wenigstens einem Teilbereich überdecken, wobei der Teilbereich das Wandlerelement bildet.

Ein derart ausgestalteter Ultraschallwandler-Prüfkopf hat die zusätzlichen Vorteile der einfachen und preisgünstigen Herstellbarkeit sowie der einfachen Ansteuerbarkeit. Der letztgenannte Vorteil ergibt sich daraus, daß im Vergleich zu einer Ultraschallwandler-Matrix, bei der z.B. jedes Wandlerelement durch je eine erste und je eine zweite Elektrode angesteuert ist, insgesamt weniger Elektroden zur Ansteuerung erforderlich sind.

Gemäß einer bevorzugten Ausgestaltung erstrecken sich die ersten Elektroden in einer ersten Längsrichtung parallel zueinander, und die zweiten Elektroden in einer im wesentlichen senkrecht zu der ersten Längsrichtung stehenden zweiten Längsrichtung parallel zueinander. Dadurch wird die Herstellbarkeit des Ultraschallwandler-Prüfkopfes weiter vereinfacht. Infolge der senkrechten Ausrichtung der beiden Längsrichtungen ist ein Schwenk der Sende- bzw. Empfangsrichtung des Ultraschallwandlers in besonders vielen Ebenen im Werkstück möglich.

Bevorzugt ist - in einer Draufsicht auf eine der Flachseiten gesehen - eine die elektrische Trennung zwischen zwei zweiten Elektroden bewirkende Trennzone zumindest teilweise innerhalb des Trennbereichs angeordnet. Dadurch sind die an unterschiedliche Teilkörper angekoppelten Wandlerelemente besonders gut akustisch entkoppelt. Von Vorteil ist dies insbesondere für den Sende-Empfangs-Modus. Die Trennzone bewirkt neben der elektrischen Trennung nämlich auch eine akustische Trennung, die dadurch verstärkt wird, daß die Trennzone zumindest teilweise innerhalb des Trennbereichs liegt. Die Trennzone kann den Trennbereich auch überdecken.

Zweckmäßig für die Herstellung des Ultraschallwandler-Prüfkopfes ist es, daß der Trennbereich im wesentlichen parallel zur Trennzone ausgerichtet ist.

Gemäß einer speziellen Ausgestaltung sind mindestens jeweils zwei zweite Elektroden und Teilkörper vorgesehen, wobei jeder Teilkörper ausschließlich an je eine der Elektroden akustisch angekoppelt ist.

Beispielsweise weist der Ultraschallwandler-Prüfkopf eines oder mehrere Wandlerelemente auf, an die ausschließlich der erste Teilkörper angekoppelt ist, sowie eines oder mehrere andere Wandlerelemente, an die ausschließlich der zweite Teilkörper angekoppelt ist.

Nach einem anderen Beispiel sind eines oder mehrere Wandlerelemente an einem ersten der Teilkörper Sender und eines oder mehrere andere Wandlerelemente an einem zweiten der Teilkörper Empfänger. Ein derart ausgestalteter Ultraschallwandler-Prüfkopf ist nicht nur im Impuls-Echo-Modus sondern in vorteilhafter Weise auch im Sende-Empfangs-Modus betreibbar.

In einer besonders bevorzugten Ausgestaltung des Ultraschallwandler-Prüfkopfes sind die Wandlerelemente symmetrisch bezüglich des Trennbereichs angeordnet.

Beispielsweise sind die ersten Elektroden symmetrisch bezüglich des Trennbereichs angeordnet.

Die auf das Verfahren bezogene Aufgabe wird gemäß der Erfindung gelöst durch ein Verfahren, wonach eines oder mehrere Wandlerelemente, an die ein erster Teilkörper aber nicht ein zweiter Teilkörper angekoppelt ist, zum Senden, und eines oder mehrere Wandlerelemente, an die der zweite Teilkörper aber nicht der erste Teilkörper angekoppelt ist, zum Empfangen von Ultraschallwellen aktiviert werden.

Beispielsweise arbeitet der Ultraschallwandler-Prüfkopf im Sende-Empfangs-Modus und ist dabei besonders zur Detektion oberflächennaher Fehler im Werkstück geeignet. Die zum Senden aktivierten Wandlerelemente werden dann ausschließlich zum Senden und die zum Empfangen aktivierten Wandlerelemente ausschließlich zum Empfangen aktiviert.

Eine Ausgestaltung des Verfahrens sieht vor, daß eines oder mehrere Wandlerelemente sowohl zum Senden als auch zum Empfangen von Ultraschallwellen aktiviert werden. In dieser Betriebsweise arbeitet der Ultraschallwandler-Prüfkopf im Impuls-Echo-Modus. Von Vorteil ist dabei insbesondere, daß das gesamte Ensemble der vorhandenen Wandlerelemente sowohl zum Senden als auch zum Empfangen benutzt werden kann. Der Ultraschallwandler-Prüfkopf arbeitet demzufolge im Impuls-Echo-Modus besonders empfindlich und effizient, z.B. auch bei der Untersuchung tiefer gelegener Volumenbereiche des Prüflings.

Zur weiteren Erläuterung des Ultraschallwandler-Prüfkopfes nach der Erfindung wird auf die Figuren 1 und 2 Bezug genommen, in denen ein bevorzugtes Ausführungsbeispiel schematisch veranschaulicht ist. Der beispielhaften Erläuterung des Verfahrens nach der Erfindung dienen die Figuren 3 und 4. Im einzelnen zeigen:

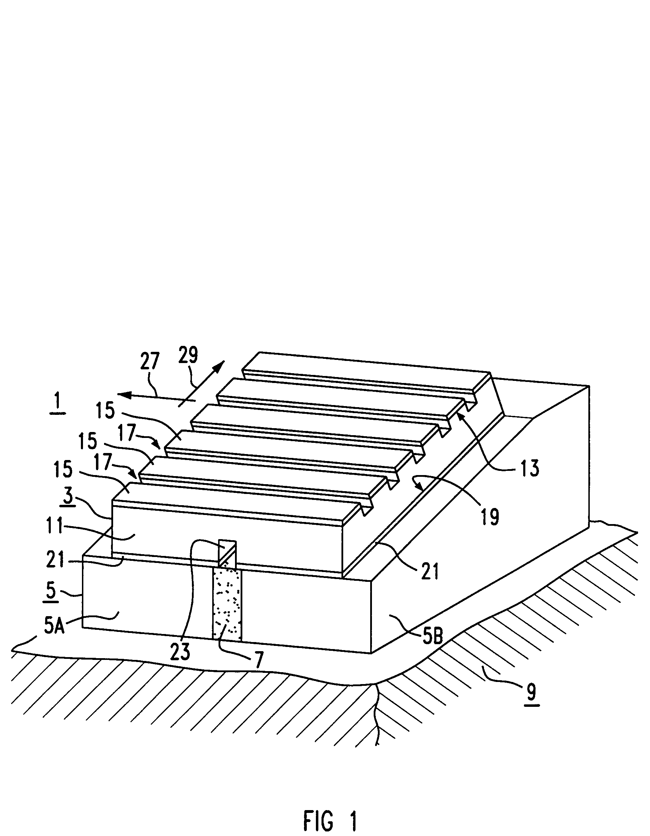

- FIG 1: einen Ultraschallwandler-Prüfkopf in perspektivischer Ansicht,

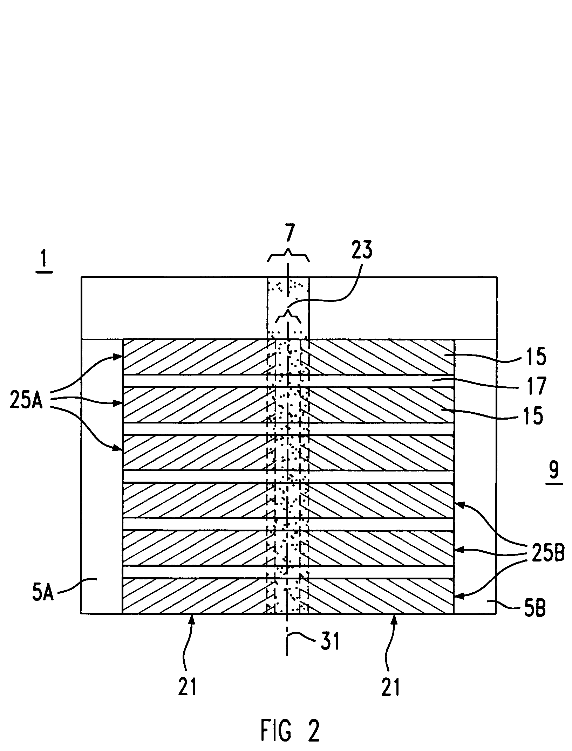

- FIG 2: den Ultraschallwandler-Prüfkopf von Figur 1 in einer Draufsicht,

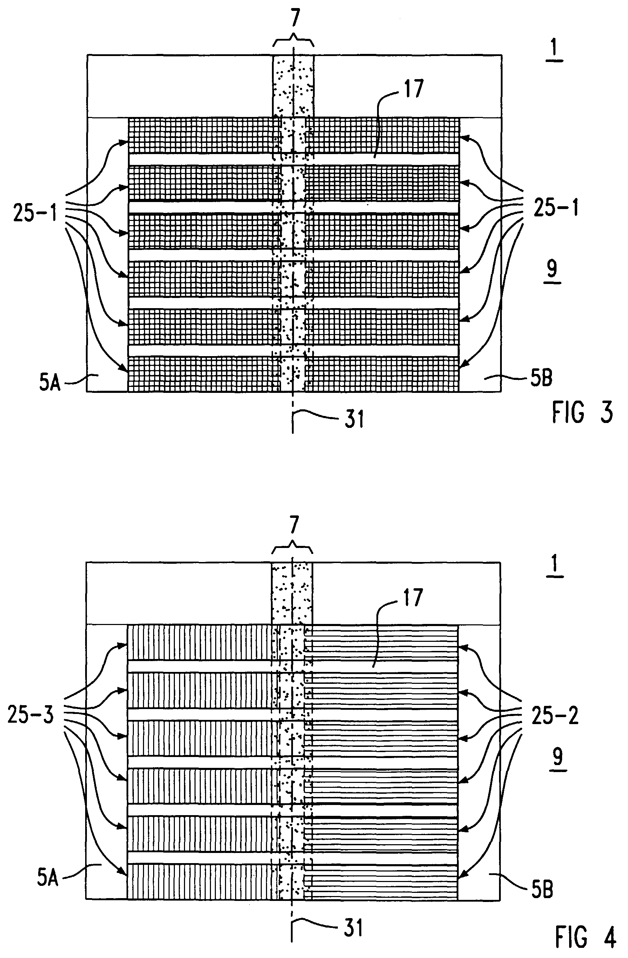

- FIG 3: den Ultraschallwandler-Prüfkopf bei Ansteuerung im Impuls-Echo-Modus, und
- FIG 4: den Ultraschallwandler-Prüfkopf bei Betrieb im Sende-Empfangs-Modus.

Der in Figur 1 gezeigte, insgesamt mit 1 bezeichnete Ultraschallwandler-Prüfkopf umfaßt einen Ultraschallwandler 3 und einen Vorlaufkörper 5. Der Vorlaufkörper 5 besteht aus einem ersten Teilkörper 5A und einem zweiten Teilkörper 5B, die durch einen Trennbereich oder eine Trennschicht 7 akustisch voneinander getrennt sind.

Der Ultraschallwandler 3 ist an der Oberseite sowohl des ersten Teilkörpers 5A als auch des zweiten Teilkörpers 5B akustisch angekoppelt. Die Unterseite des Vorlaufkörpers 5 liegt auf einem Prüfling oder Werkstück 9 auf. Durch diese Unterseite ist die zur Ankopplung an den Prüfling 9 nötige Ankoppelfläche gegeben.

Zur Erzeugung gewünschter vorbestimmter Sende- und Empfangswinkel für sich im Prüfling 9 ausbreitende Ultraschallwellen ist der Vorlaufkörper 5 mit seinen beiden Teilkörpern 5A, 5B keilförmig ausgebildet.

Der Vorlaufkörper 5 ist bevorzugt aus Plexiglas, der Trennbereich 7 bevorzugt aus korkhaltigem Material gefertigt.

Der Ultraschallwandler 3 umfaßt einen piezoelektrischen Körper 11. Dieser weist an seiner oberen oder ersten Flachseite 13 insgesamt sechs längsgestreckte erste Elektroden 15 auf, die nebeneinander angeordnet und jeweils durch eine Nut 17 voneinander getrennt sind. An der unteren oder zweiten Flachseite 19 des Ultraschallwandlers 3 befinden sich nebeneinander angeordnet insgesamt zwei zweite Elektroden 21, die durch eine mittig angeordnete Trennzone 23 voneinander getrennt sind. Die Trennzone 23 hat die Form einer Nut. Die Nuten 17 zwischen den ersten Elektroden 15 sowie die nutförmige Trennzone 23 verlaufen senkrecht zueinander. Sie sind durch Ansägen hergestellt. Sie können eine Tiefe von etwa 70% der Dicke des nicht angesägten Ultraschallwandlers 3 aufweisen.

Die elektrischen Anschlußleitungen zu den Elektroden 15, 21 sind aus Gründen der Übersichtlichkeit in den Figuren 1 und 2 nicht dargestellt. Insgesamt sind 8 Anschlußleitungen vorgesehen. Der Ultraschallwandler-Prüfkopf 1 ist in einem Gehäuse angeordnet, das ebenfalls nicht gezeigt ist.

In Figur 2 wird in einer Draufsicht auf den Ultraschallwandler-Prüfkopf 1 deutlich, wie durch ein Überdecken von Teilbereichen der ersten Elektroden 15 mit Teilbereichen der zweiten Elektroden 21 Wandlerelemente 25A, 25B gebildet sind. Insgesamt verfügt der dargestellte Ultraschallwandler 3 über zwölf schraffiert dargestellte Wandlerelemente 25A, 25B, wovon sechs Wandlerelemente 25A ausschließlich an den ersten Teilkörper 5A und sechs andere Wandlerelemente 25B ausschließlich an den zweiten Teilkörper 5B akustisch angekoppelt sind.

Die ersten Elektroden 15 erstrecken sich parallel zueinander entlang einer ersten Längsrichtung 27, und die zweiten Elektroden 21 erstrecken sich parallel zueinander entlang einer zweiten Längsrichtung 29 (Figur 1). Die beiden Längsrichtungen 27, 29 stehen senkrecht aufeinander.

Aus Figur 2 ist ferner ersichtlich, daß die Trennzone 23 innerhalb des Trennbereichs 7 angeordnet ist. Sowohl die Anordnung der Wandlerelemente 25A, 25B als auch die Anordnung der ersten Elektroden 15 ist symmetrisch bezüglich einer Symmetrieachse 31, die mittig entlang des Trennbereichs 7 verläuft.

In den Figuren 3 und 4 ist der Ultraschallwandler-Prüfkopf 1 wie in Figur 2 in einer Draufsicht dargestellt.

In Figur 3 ist durch die Kreuzschraffur angedeutet, daß alle zwölf Wandlerelemente 25-1 sowohl zum Senden als auch zum Empfangen aktivierbar sind. Der gesamte Ultraschallwandler 3 arbeitet in dieser Betriebsweise im Impuls-Echo-Modus.

In Figur 4 werden die an den ersten Teilkörper 5A akustisch angekoppelten Wandlerelemente 25-3 ausschließlich zum Senden aktiviert, was durch eine Schraffur parallel zur Symmetrieachse 31 angedeutet ist. Die an den zweiten Teilkörper 5B angekoppelten Wandlerelemente 25-2 dienen ausschließlich als Empfänger, was durch eine Schraffur senkrecht zur Symmetrieachse 31 angedeutet ist. Der Ultraschallwandler-Prüfkopf 1 arbeitet bei einer derartigen Ansteuerung im Sende-Empfangs-Modus. Dabei senden die sechs links der Symmetrieachse 31 angeordneten Wandlerelemente 25-3 eine Ultraschallwelle aus. Die beispielsweise an einem Fehler im Werkstück 9 reflektierte Welle wird dann von den sechs rechts der Symmetrieachse 31 gelegenen Wandlerelementen 25-2 empfangen und das Empfangssignal ausgewertet.

## Patentansprüche

1. Ultraschallwandler-Prüfkopf (1), insbesondere für die zerstörungsfreie Materialprüfung, mit einem aus einzeln ansteuerbaren Wandlerelementen (25) aufgebauten Ultraschallwandler (3) und mit einem Vorlaufkörper (5),
**dadurch gekennzeichnet**, daß der Vorlaufkörper (5) mindestens zwei durch einen Trennbereich (7) akustisch voneinander getrennte Teilkörper (5A, 5B) aufweist, und daß mindestens zwei der Teilkörper (5A, 5B) an jeweils wenigstens ein Wandlerelement (25A, 25B) akustisch angekoppelt sind, an welches nicht auch der jeweils andere Teilkörper (5B, 5A) akustisch angekoppelt ist.

2. Ultraschallwandler-Prüfkopf (1) nach Anspruch 1,
**dadurch gekennzeichnet,** daß bei dem Ultraschallwandler (3) ein piezoelektrischer Körper (11) an einer ersten Flachseite (13) mit voneinander elektrisch getrennten ersten Elektroden (15) versehen ist, denen an der von der ersten Flachseite (13) abgewandten zweiten Flachseite (19) voneinander und von den ersten Elektroden (15) elektrisch getrennte zweite Elektroden (21) derart zugeordnet sind, daß sich die ersten Elektroden (15) und die zweiten Elektroden (21) in einer Draufsicht auf eine der Flachseiten (13,19) gesehen jeweils in wenigstens einem Teilbereich überdecken, wobei der Teilbereich das Wandlerelement (25) bildet.

3. Ultraschallwandler-Prüfkopf (1) nach Anspruch 2,
**dadurch gekennzeichnet**, daß sich die ersten Elektroden (15) in einer ersten Längsrichtung (27) parallel zueinander und die zweiten Elektroden (21) in einer im wesentlichen senkrecht zu der ersten Längsrichtung (27) stehenden zweiten Längsrichtung (29) parallel zueinander erstrecken.

4. Ultraschallwandler-Prüfkopf (1) nach einem der Ansprüche 2 oder 3,
**dadurch gekennzeichnet**, daß -in einer Draufsicht auf eine der Flachseiten (13, 19) gesehen- eine die elektrische Trennung zwischen zwei zweiten Elektroden (21) bewirkende Trennzone (23) zumindest teilweise innerhalb des Trennbereichs (7) angeordnet ist.

5. Ultraschallwandler-Prüfkopf (1) nach Anspruch 4,
**dadurch gekennzeichnet**, daß der Trennbereich (7) im wesentlichen parallel zur Trennzone (23) ausgerichtet ist.

6. Ultraschallwandler-Prüfkopf (1) nach einem der Ansprüche 2 bis 5,
**gekennzeichnet durch** mindestens jeweils zwei zweite Elektroden (21) und Teilkörper (5A, 5B), wobei jeder Teilkörper (5A, 5B) ausschließlich an je eine der Elektroden (21) akustisch angekoppelt ist.

7. Ultraschallwandler-Prüfkopf (1) nach einem der Ansprüche 1 bis 6,
**dadurch gekennzeichnet**, daß eines oder mehrere Wandlerelemente (25-3) an einem ersten der Teilkörper (5A) Sender und eines oder mehrere andere Wandlerelemente (25-2) an einem zweiten der Teilkörper (5B) Empfänger sind.

8. Ultraschallwandler-Prüfkopf (1) nach einem der Ansprüche 1 bis 7,
**dadurch gekennzeichnet**, daß die Wandlerelemente (25) symmetrisch bezüglich des Trennbereichs (7) angeordnet sind.

9. Ultraschallwandler-Prüfkopf (1) nach einem der Ansprüche 2 bis 8,
**dadurch gekennzeichnet**, daß die ersten Elektroden (15) symmetrisch bezüglich des Trennbereichs (7) angeordnet sind.

10. Verfahren zum Betreiben eines Ultraschallwandler-Prüfkopfs (1) nach einem der vorhergehenden Ansprüche,
**dadurch gekennzeichnet**, daß eines oder mehrere Wandlerelemente (25-3), an die ein erster Teilkörper (5A), aber nicht ein zweiter Teilkörper (5B) angekoppelt ist, zum Senden, und eines oder mehrere Wandlerelemente (25-2), an die der zweite Teilkörper (5B), aber nicht der erste Teilkörper (5A) angekoppelt ist, zum Empfangen von Ultraschallwellen aktiviert werden.

11. Verfahren nach Anspruch 10,
**dadurch gekennzeichnet**, daß eines oder mehrere Wandlerelemente (25-1) sowohl zum Senden als auch zum Empfangen von Ultraschallwellen aktiviert werden.
